# EUROPEAN PATENT SPECIFICATION

(11) **EP 2 660 037 B1**
(45) Date of publication and mention of the grant of the patent: **02.11.2016**
(21) Application number: 10861362.1
(22) Date of filing: 28.12.2010
(51) Int. Cl.: B29D 30/08, B60C 5/00

(54) **METHOD FOR PRODUCING A PNEUMATIC TIRE**
VERFAHREN ZUR REIFENHERSTELLUNG
PROCÉDÉ DE FABRICATION D'UN PNEUMATIQUE

(43) Date of publication of application: 06.11.2013
(73) Proprietor: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventor: PARFONDRY Alain, 63040 Clermont-Ferrand Cedex 9 (FR); DELFINO Antonio, Clermont-Ferrand, Cedex 9 (FR); GREVERIE Ludovic, Ota-shi Gunma 373-8668 (JP); FOMBELLE Damien, 63040 Clermont-Ferrand Cedex 9 (FR)
(74) Representative: Diernaz, Christian
(86) International application number: PCT/JP2010/073755
(87) International publication number: WO 2012/090311

(56) References cited:
- EP-A1- 2 135 755
- JP-A- 2005 262 920
- JP-A- 2005 313 510
- JP-A- 2007 099 162
- JP-A- 2008 162 496
- JP-A- 2008 213 414
- JP-A- 2010 000 947
- JP-A- 2010 280 340
- KR-A- 20100 118 419
- US-A- 4 399 851
- US-A1- 2010 307 655

## Description

### Technical Field

The present invention relates to a pneumatic tyre and to a method for producing same, and specifically the present invention relates to a pneumatic tyre which is provided with a noise damper in the form of a continuous ribbon for suppressing cavity resonance generated in a tyre cavity, and to a method for producing same.

### Prior Art

Resonant vibration (cavity resonance) in a tyre cavity is generated by the vibration of air enclosed in the tyre cavity. The air in the tyre cavity is generally excited by deformation of the tyre tread part and sidewall part as the tyre travels, and air enclosed in the annular cavity acts as an air column when this air is excited.

Sound waves which are excited in the tyre cavity are transmitted inside the vehicle compartment as a solid-borne sound which spreads through the wheels, suspension and motor vehicle body, and is felt by vehicle passengers as disagreeable low-frequency noise.

### Prior Art documents

Introducing a noise damper into the tyre cavity is known as an effective means for reducing the cavity resonance and document JP 2007-168243 - A describes technology involving a method for producing such a tyre, in which a spongy material which is pre-moulded into a strip shape is attached to the tyre internal surface using double-sided adhesive tape whereby a tyre of this type is produced.

Furthermore, document JP 2008-213418 - A describes technology involving a method for producing such a tyre, in which the internal surface of a tyre is coated with a liquid rubber composition which incorporates air bubbles, and the coated liquid rubber composition is foamed and crosslinked whereby a sponge material is formed.

Document KR 20100118419 - A describes a low noise tire manufacturing method, wherein a sound-absorbing foamable material is circumferentially sprayed on the inner wall of the tire; thereafter this material is cut in a predetermined shape.

The manufacturing method according to document JP 2008213414 - A involves the application of a liquid rubber compound containing organic peroxide to one portion of the inner surface of the pneumatic tire.

Thereafter air is blown to cure the liquid rubber compound and form a spongy material.

### Summary of the Invention

### Problem to be Solved by the Invention

However, with the technology described in document JP 2007-168243-A, the preparation steps require a large amount of time, such as preparing the sponge material which is pre-moulded into a strip shape, cutting this material to the length to be attached, attaching the double-sided adhesive tape or the like to the attachment surface, and buffing the internal surface of the tyre, etc., and there is a problem in that the tyre production process as a whole can in no way be considered very labour efficient.

Furthermore, there is a problem with the technology described in the above mentioned prior art documents in that it is not possible to effectively produce a noise damper that can respond to the recent requirement of further reducing disagreeable low-frequency sound waves which are transmitted to vehicle passengers.

The present invention has therefore been devised in order to solve the abovementioned problems in the prior art, and the aim of the invention lies in providing a pneumatic tyre which has better producibility and is provided with a noise damper in the tyre cavity, and a method for producing same.

### Means for Solving the Problem

In order to achieve the abovementioned aim, the present invention provides a method for producing a pneumatic tyre in which a noise damper in the form of at least one continuous ribbon for reducing cavity resonance in a tyre cavity is provided on the internal surface of a tyre on the inside in the radial direction of the tyre corresponding to the tyre tread, said method being characterized in that it includes the following stages: a stage in which a vulcanized and shaped tyre which is not provided with the abovementioned noise damper is provided; a stage in which a composition for forming the noise damper is mixed with a foaming agent to produce a liquid composition; a stage in which the tyre is rotated in an upright state by means of a tyre holding and rotation device, and the liquid composition is introduced onto the tyre internal surface by means of a device for introducing the liquid composition; a stage in which the relative positional relationship of the pneumatic tyre and the introduction implement in the axial direction of the tyre is varied while the liquid composition is introduced onto the tyre internal surface, and the liquid composition introduced onto the tyre internal surface is formed into a gel; and a stage in which the gelled liquid composition is foamed and dried.

The present invention having the constitution described above includes the following stages: a stage in which a composition for forming a noise damper is mixed with a foaming agent to produce a liquid composition; a stage in which the tyre is rotated in an upright state by means of a tyre holding and rotation device, and the liquid composition is introduced onto the tyre internal surface by means of a device for introducing the liquid composition; a stage in which the relative positional relationship of the pneumatic tyre and the introduction implement in the axial direction of the tyre is varied while the liquid composition is introduced onto the tyre internal surface, and the liquid composition introduced onto the tyre internal surface is formed into a gel; and a stage in which the gelled liquid composition is foamed and dried, and therefore a noise damper in the form of at least one continuous ribbon extending at a predetermined angle with respect to the circumferential direction of the tyre is formed on the tyre internal surface. In addition to the sound-absorbing effect of the noise damper itself, a noise damper such as this impedes vibration of air which is excited in the tyre cavity and propagates in the circumferential direction of the tyre by virtue of the fact that the noise damper extends at a predetermined angle with respect to the circumferential direction of the tyre, and therefore it is possible to effectively reduce cavity resonance. The tyre is then rotated in an upright state by means of a tyre holding and rotation device, the liquid composition is introduced onto the tyre internal surface by means of the liquid composition introduction implement, the relative positional relationship of the pneumatic tyre and the introduction implement in the axial direction of the tyre is varied while the liquid composition is introduced onto the tyre internal surface, and the liquid composition introduced onto the tyre internal surface is formed into a gel then foamed and dried, and therefore it is possible to effectively provide a noise damper in the form of at least one continuous ribbon that extends at a predetermined angle with respect to the circumferential direction of the tyre, and as a result it is possible to improve the producibility of a pneumatic tyre which can further reduce cavity resonance.

According to the present invention, the speed of rotation of the tyre and the time until the liquid composition forms a gel in the stage of introducing the liquid composition are preferably set in such a way that the liquid composition forms a gel before the tyre has been rotated through 180°.

The invention having the constitution described above makes it possible to suppress events which may arise such as some of the ungelled liquid composition dropping downwards.

According to the present invention, the liquid composition is preferably a polyurethane composition.

The present invention having the constitution described above employs a polyurethane composition as the liquid composition, and therefore when said liquid composition forms a gel, a film portion is readily produced on the surface thereof, and this film portion prevents permeation of water into the noise damper, and as a result it is possible to achieve an effect whereby the durability of the noise damper in the form of a continuous ribbon is improved.

According to the present invention, the polyurethane composition preferably comprises at least MDI serving as an isocyanate, and polyether serving as a polyol.

According to the present invention, the foaming agent is preferably water.

According to the present invention having the constitution described above, the liquid composition can be foamed without the use of a costly foaming agent, and the gas which is produced is carbon dioxide, and therefore an operator is not subjected to any unpleasant odour and there is no adverse effect on the health of the operator.

According to the present invention, the speed of rotation of the tyre when the liquid composition is introduced is preferably between 0.6 rpm and 300 rpm.

According to the present invention, the speed of rotation of the tyre when the liquid composition is introduced is preferably between 12 rpm and 180 rpm.

According to the present invention, the time until the liquid composition forms a gel is preferably at least equal to 1 second but less than 60 seconds.

According to the present invention, the time until the liquid composition forms a gel is preferably at least equal to 3 seconds but less than 30 seconds.

According to the present invention, the liquid composition is preferably introduced without pretreatment of the internal surface of the vulcanized and shaped tyre which is provided.

According to the present invention having the constitution described above, production steps can be omitted, such as when there is no need to clean the internal surface of the vulcanized and shaped tyre, so it is possible to further improve the producibility of a pneumatic tyre which can further reduce cavity resonance.

### Advantage of the Invention

The pneumatic tyre and method for producing same according to the present invention make it possible to improve producibility while reducing cavity resonance.

### Brief Description of the Figures

[Figure 1] schematically shows the cross section in the radial direction of a pneumatic tyre provided with a noise damper, produced by means of the production method according to a mode of embodiment of the present invention.
[Figure 2] schematically shows the tyre internal surface of a pneumatic tyre provided with a noise damper, produced by means of the production method according to a mode of embodiment of the present invention.
[Figure 3] is a front view schematically showing one exemplary embodiment of a device for introducing the noise damper in the form of a continuous ribbon onto the tyre internal surface, which is used in the production method according to a mode of embodiment of the present invention.
[Figure 4] is an enlargement of the main parts in figure 3 to illustrate the method of providing the continuous ribbon on the tyre internal surface using the device shown in figure 3, where figure 4(a) is a front view showing the cross section of the tyre viewed from the radial direction of the tyre, and figure 4(b) is a side view showing the cross section of the tyre viewed from the axial direction of the tyre.

### Mode of Embodiment of the Invention

A preferred mode of embodiment of the present invention will be described below with reference to the figures.

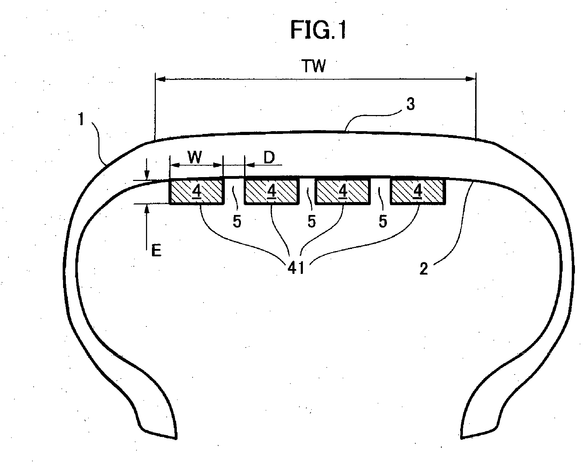

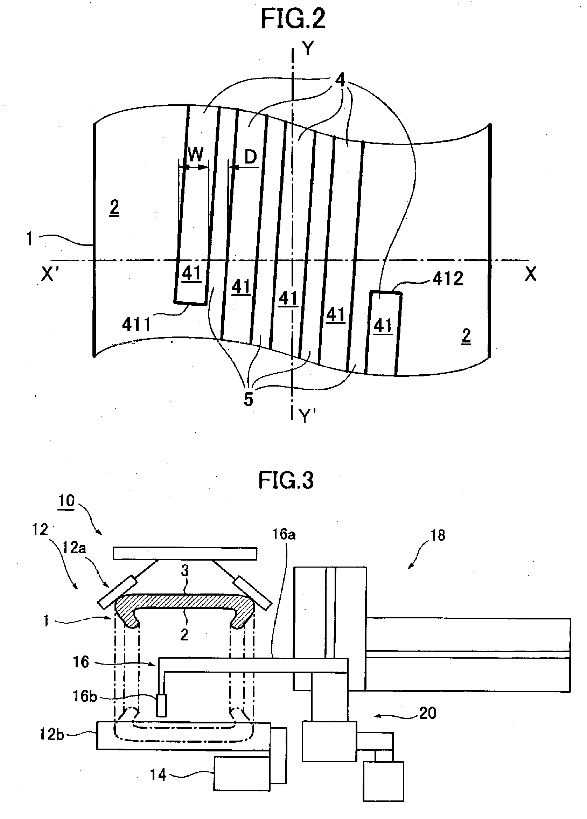

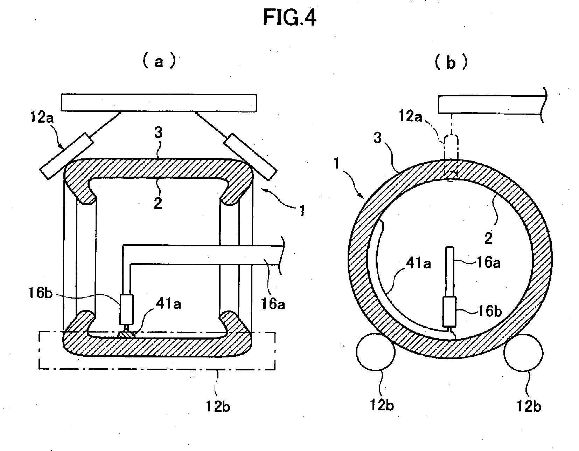

The pneumatic tyre produced by means of the production method according to a mode of embodiment of the present invention will be described first of all with the aid of figures 1 and 2. The method for producing a pneumatic tyre according to a mode of embodiment of the present invention will be described later with the aid of figures 3 and 4.

Figure 1 schematically shows the cross section in the radial direction of a pneumatic tyre provided with a noise damper, produced by means of the production method according to a mode of embodiment of the present invention, and figure 2 schematically shows the tyre internal surface of a pneumatic tyre provided with a noise damper, produced by means of the production method according to a mode of embodiment of the present invention. In figure 2 the circumferential direction of the tyre is denoted by YY', and the axial direction of the tyre is denoted by XX'.

First of all, as shown in figure 1, the reference symbol 1 denotes a pneumatic tyre 1 provided with a noise damper 4. The noise damper 4 serves to reduce cavity resonance, and it is formed by a continuous ribbon 41 having a width W and a thickness E, as shown in figures 1 and 2, and is attached to an internal surface 2 of the pneumatic tyre. Here, the "internal surface of the tyre" (tyre internal surface 2) refers to the surface of the tyre facing the cavity, and in a normal state of usage of the tyre (a state in which the tyre is attached to a wheel) it is a surface which cannot be seen from the outside.

The continuous ribbon 41 is formed by a single continuous ribbon 41, which is continuously attached to the tyre internal surface 2 running four times around said internal surface, in such a way as to be angled with respect to the circumferential direction of the tyre. Continuous grooves 5 having a groove width D extending three times around the tyre are formed on the internal surface 2 thereof by means of adjacent continuous ribbons 41 and the tyre internal surface 2, as a result of a single continuous ribbon 41 being continuously attached four times around the tyre internal surface. The continuous grooves 5 formed in this way also extend in such a way as to be angled with respect to the circumferential direction of the tyre as shown in figure 2. That is to say, in this mode of embodiment, the continuous ribbon 41 is attached in such a way as to extend at a predetermined angle with respect to the circumferential direction of the tyre, and the continuous grooves 5 are formed by adjacent continuous ribbons 41 and the tyre internal surface 2.

As shown in figure 1, the tyre 1 has a tread surface 3 having a width TW which comes into contact with the road surface during travel. It should be noted that the tyre size in this example is 225/55R16.

The width W of the continuous ribbon 41 is formed in such a way as to be between 5% and 25% of the width TW of the tread 3. In this mode of embodiment the width TW of the tread 3 is 168 mm and the width W of the continuous ribbon 41 is 24 mm.

The thickness E of the continuous ribbon 41 is formed in such a way as to be between 50% and 200% of the width W of the continuous ribbon 41. In this mode of embodiment the thickness E of the continuous ribbon 41 is 15 mm.

The continuous ribbon 41 is made of a sound-absorbing material which has excellent anti-vibration properties and sound absorption properties. The continuous ribbon 41 is preferably a single continuous ribbon, but it is equally possible to form a single continuous ribbon by combining multiple short ribbons. The sound-absorbing material which forms the continuous ribbon 41 is preferably any one material selected from the group consisting of sponge, a foamed rubber composition, glass wool, rock wool, and cellulose fibre. The continuous ribbon 41 in this mode of embodiment is formed as a sponge material by means of a method which will be described later.

The continuous ribbon 41 may be formed while directly introducing (injecting), for example, a polyurethane-based material for forming the sponge material into the tyre cavity, as will be described later. In this way, if, for example, the polyurethane-based material is directly introduced into the tyre cavity, there may be a difference in the growth rate of the material at the material surface and inside the material due to differences in the material temperature and environmental temperature during the process of forming the continuous ribbon 41, and a thin film-like portion may be formed at the material surface. The film-like portion which is present at the surface of this continuous ribbon 41 may produce an effect of preventing water from penetrating into the continuous ribbon 41 and improving the durability of the continuous ribbon 41.

The continuous ribbon 41 is fixed to the tyre internal surface 2 in such a way as to occupy a range of at least 30% of the range of the tyre internal surface 2 corresponding to the range where the tread 3 is formed on the inside in the radial direction of the tread 3. In this mode of embodiment, the continuous ribbon 41 is fixed to the tyre internal surface 2 in such a way as to occupy a range of 85% on the inside in the radial direction of the tread 3, in other words the continuous ribbon 41 is fixed to the tyre internal surface 2 in such a way as to cover 85% of the range of the tyre internal surface 2 corresponding to the tread 3.

The width D of the continuous groove 5 is formed in such a way as to be at least equal to 20% of the width W of the continuous ribbon 41. In this mode of embodiment, the width D of the continuous groove 5 is 13 mm.

The continuous ribbon 41 shown in the cross-sectional view in the radial direction in figure 1 is formed only by a single continuous ribbon 41, as described above; as shown in figure 2, this continuous ribbon 41 comprises two ends, namely a start end 411 and a terminal end 412, and these two ends are formed in such a way as to be offset from each other in the axial direction, in other words in such a way as to have a space therebetween. The amount of offset of the two ends 411, 412 in this mode of embodiment is 148 mm.

In this way, with the pneumatic tyre 1 according to this mode of embodiment, the continuous ribbon 41 attached to the tyre internal surface 2 comprises two ends, namely the start end 411 and the terminal end 412, as shown in figure 2, and these two ends 411, 412 are formed in such a way as to be offset from each other in the axial direction. The continuous ribbon 41 is provided on the tyre internal surface 2 in such a way that a single continuous ribbon 41 runs four times around the tyre, as described above, in other words it runs four times at a predetermined angle with respect to the circumferential direction of the tyre, and as a result the continuous grooves 5 are formed running three times around the tyre by adjacent continuous ribbons 41 and the tyre internal surface 2.

It should be noted that with the pneumatic tyre 1 according to this mode of embodiment, the start end 411 and terminal end 412 are provided at positions which are offset on the axis of the tyre internal surface 2 as a result of the continuous ribbon 41 running four times around the circumferential direction of the tyre, as shown in figure 2, but if the continuous ribbon 41 runs three times around the circumferential direction of the tyre, for example, the continuous ribbon 41 may be provided in such a way that the start end 411 and terminal end 412 are provided at positions which are offset with respect to the circumferential direction of the tyre and the start end 411 and terminal end 412 are offset in the axial direction at different positions on the axis of the tyre internal surface 2.

It should be noted that in the example of the tyre according to this mode of embodiment, the cross-sectional shape of the continuous ribbon 41 is rectangular, but this cross-sectional shape is not limited to a rectangular shape. The cross-sectional shape of the continuous ribbon 41 should be a cross-sectional shape which enables the continuous grooves 5 to be formed, and said shape may be appropriately modified to a semicircular or trapezoidal shape, or a shape in which the side surfaces or upper surface are expanded in the form of a curve, among others. It should be noted that when the continuous ribbon 41 has a cross-sectional shape other than a rectangular shape, the width W of the continuous ribbon 41 is the maximum width projected onto the tyre internal surface 2, and the thickness E is the maximum thickness in the radial direction of the tyre.

Furthermore, the continuous ribbon may be formed in such a way as to meander at a predetermined angle with respect to the circumferential direction of the tyre in such a way as to form the continuous grooves. In this case, the width D of the continuous grooves may vary continuously in the direction of extension of the continuous ribbon, or the meandering shape of adjacent continuous ribbons may be arranged in such a way that the width D of the continuous grooves is constant.

The main action and effects of the pneumatic tyre provided with a noise damper according to this mode of embodiment will be described next.

The continuous ribbon 41 is first of all formed in such a way as to be angled with respect to the circumferential direction of the tyre in order to prevent propagation of sound waves from cavity resonance which progress in the circumferential direction of the tyre, and therefore cavity resonance can be effectively reduced.

Here, cavity resonance is generated because air enclosed in the annular cavity acts as an air column as the tyre travels, and this cavity resonance is a cause of air vibration whereby the inside of the air column mainly spreads in the circumferential direction of the tyre. The continuous ribbon 41 is therefore disposed in such a way as to extend obliquely at a predetermined angle with respect to the circumferential direction of the tyre, whereby it is possible to effectively reduce cavity resonance.

Furthermore, as described above, the continuous grooves 5 are formed in such a way as to extend at a predetermined angle with respect to the circumferential direction of the tyre, and therefore the energy of air vibration which propagates mainly in the circumferential direction of the tyre from cavity resonance conducted into the continuous grooves 5 is divided into a component which permeates into the continuous ribbon 41, and a component which is reflected by the surface of the continuous ribbon 41. The energy component which permeates into the continuous ribbon 41 is attenuated by the effect of the sound-absorbing material which forms the continuous ribbon 41, and the component which is reflected by the surface of the continuous ribbon 41 is not only attenuated by reflection thereof, the energy thereof also reaches other sections of the continuous ribbon 41 whereby the abovementioned permeation/reflection phenomena are repeated, so cavity resonance can be more effectively reduced.

In addition, according to this mode of embodiment, the groove width D of the continuous groove 5 is at least equal to 20% of the width W of the continuous ribbon, so the area over which the tyre internal surface comes into direct contact with air in the tyre cavity by way of the continuous groove can be made a sufficient area to radiate heat. This means that the heat mainly generated in the tread while the tyre is travelling can be reliably released from the tyre internal surface to the tyre cavity even though the continuous ribbon 41 constituting the noise damper 4 is provided running multiple times (four times in this mode of embodiment) around the inside of the tread 3 in the radial direction thereof, and as a result it is possible to maintain high-speed durability.

In addition, the structure in this mode of embodiment is such that a single continuous ribbon 41 is fixed in the tyre cavity running four times around the tyre in such a way as to extend obliquely with respect to the circumferential direction of the tyre, and therefore a fixing method may be adopted in which, for example, the start end 411 of the continuous ribbon 41 is fixed to the tyre internal surface, after which the continuous ribbon 41 should continue to be fixed up to the terminal end 412 thereof while the tyre 1 is rotated about the axis of rotation thereof and the continuous ribbon 41 or the tyre 1 itself is moved in the axial direction. In this way, the tyre 1 provided with the noise damper 4 according to this mode of embodiment enables the continuous ribbon 41 to be attached with relative ease, and the producibility of the tyre 1 provided with the continuous ribbon 41 constituting the noise damper 4 can be maintained.

In addition, according to this mode of embodiment, the width W of the continuous ribbon 41 is formed in such a way as to be between 5% and 25% of the width TW of the tread 3. Here, if the width W of the continuous ribbon is less than 5% of the width TW of the tread 3, the width W of the continuous ribbon 41 is excessively small, and it is necessary to increase the number of turns of the continuous ribbon in order to effectively reduce cavity resonance, and producibility is reduced. On the other hand, if the width W of the continuous ribbon 41 is more than 25% of the tread width TW, the proportion of the tyre internal surface 2 occupied by the continuous ribbon increases, and as a result the proportion of the tyre internal surface 2 which comes into contact with air in the tyre cavity is reduced, so the high-speed durability is reduced. Accordingly, if the width W of the continuous ribbon 41 is set between 5% and 25% of the tread width TW, it is possible to ensure high-speed durability and to maintain producibility while a reduction in cavity resonance can be envisaged.

In addition, according to this mode of embodiment, the thickness E of the continuous ribbon 41 is formed in such a way as to be between 50% and 200% of the width W of the continuous ribbon 41. Here, if the thickness E of the continuous ribbon 41 is less than 50% of the width W of the continuous ribbon 41, the thickness E of the continuous ribbon 41 does not have a sufficient height to impede propagation of sound waves from air vibration in the tyre cavity, so the degree of reduction in cavity resonance is reduced. On the other hand, if the thickness E of the continuous ribbon 41 is greater than 200% of the width W of the continuous ribbon 41, the sound-suppression effect afforded by the continuous ribbon 41 plateaus, and therefore this adversely affects the cost and weight of the tyre. Accordingly, if the thickness E of the continuous ribbon 41 is set between 50% and 200% of the width W of the continuous ribbon 41 it is possible to reduce cavity resonance more effectively, and it is possible to suppress increases in the cost and weight.

Using figures 3 and 4, a description will be given next of the method for producing a pneumatic tyre in accordance with a mode of embodiment of the present invention, in order to produce a pneumatic tyre provided with the continuous ribbon 41 which is shown in figures 1 and 2 described above, and also the production device for providing the continuous ribbon 41 on the tyre internal surface 2. Figure 3 schematically shows one exemplary embodiment of a device for introducing the noise damper in the form of a continuous ribbon onto the tyre internal surface, figure 3 being shown as a front view seen from the radial direction of a tyre held in the device. Figure 4 is an enlargement of the main parts of figure 3 for illustrating the method for providing the continuous ribbon 41 on the tyre internal surface using the device shown in figure 3, figure 4(a) being a front view seen from the radial direction of the tyre, and figure 4(b) being a side view seen from the axial direction of a tyre held in the device. The cross section of the tyre is shown in figures 4(a) and 4(b).

As shown in figure 3, a device 10 for introducing the noise damper in the form of a continuous ribbon onto the tyre internal surface according to this exemplary embodiment is provided with a tyre holding and rotation device 12 which can hold and rotate in an upright state a tyre which has been produced in advance by vulcanization and shaping. The tyre holding and rotation device 12 comprises an upper rotation and holding device 12a which holds the tyre 1 in an upright state and also allows rotation of the tyre 1, and a lower rotation and holding device 12b which holds the tyre 1 in an upright state and also causes rotation of the tyre 1. Furthermore, the device 10 comprises a tyre drive device 14 for driving the lower holding and rotation device 12b and rotating the tyre 1 in an upright state.

In addition, the device 10 is provided with: an introduction implement (nozzle) 16 for introducing/injecting a liquid composition for forming the noise damper in the form of a continuous ribbon onto the tyre internal surface 2 which is held in an upright state by means of the tyre holding and rotation device 12; an introduction implement holding/moving device 18 which is constructed in such a way as to be able to move the position of the introduction implement 16 in the height direction (radial direction) and the axial direction of the tyre 1 which is positioned and held on the tyre holding and rotation device 12; and a mixing device 20 for mixing a composition in liquid form for forming the noise damper with a foaming agent in order to produce the liquid composition; the liquid composition in the mixing device 20 is conducted to a nozzle 16b provided at the tip end of the introduction implement 16 by way of a passage 16a in the introduction implement 16.

Rotation of the tyre 1 produced by the tyre drive device 14 is transmitted to the lower holding and rotation device 12b either by way of a chain or gear etc., or through direct contact. Furthermore, operation of a drive mechanism which is provided in addition to movement of the introduction implement holding/moving device 18 is also transmitted to the introduction implement holding/moving device 18 either by way of a chain or gear etc., or through direct contact, and the introduction implement 16 moves to a predetermined position.

As shown in figure 4, the pneumatic tyre 1 which has been vulcanized and shaped is first of all held in an upright state by means of the tyre holding and rotation device 12. At this point, the liquid composition in which the composition in liquid form for forming the noise damper and the foaming agent have been mixed inside the mixing device 20, are introduced into the introduction implement 16.

The pneumatic tyre which is held in an upright state by means of the tyre holding and rotation device 12 then first of all starts to undergo rotation by means of the tyre drive device 14 and the tyre holding and rotation device 12, after which the introduction implement 16 is moved in the axial direction of the tyre by means of the introduction implement holding/moving device 18 and advances into the tyre cavity, moving as far as a predetermined position as shown in figure 4, after which the liquid composition 41a starts to be introduced from the nozzle 16b of the introduction implement 16 onto the tyre internal surface 2.

It should be noted that the start of rotation of the tyre produced by the tyre drive device 14 and tyre holding and rotation device 12 may come after the introduction implement 16 has been moved into the tyre cavity, or rotation of the tyre 1 may be started before the start of introduction of the liquid composition onto the tyre internal surface 2. Furthermore, the position in the direction of rotation of the tyre of the nozzle 16b of the introduction implement 16 with respect to the centre of rotation of the tyre is preferably a position on an imaginary axis including the centre of rotation of the tyre, in other words a position which allows introduction/injection of the liquid composition onto the tyre internal surface 2 at the very lowest position in the height direction of the tyre. Furthermore, depending on the size of the tyre into which the noise damper in the form of a continuous ribbon is being introduced, appropriate operations may also be performed such as moving the introduction implement holding/moving device 18 in the height direction of the tyre and also in the axial direction of the tyre, and making the introduction implement 16 advance into the tyre cavity in such a way that there is no interference between the tyre 1 and the introduction implement 16.

As shown in figure 4(b), after introduction of the liquid composition 41a onto the tyre internal surface 2 has started, the tyre 1 continues to be rotated by means of the tyre drive device 14, while at the same time the introduction implement 16 is moved continuously in the axial direction of the tyre by means of the introduction implement holding/moving device 18, whereby the relative positional relationship of the internal surface 2 of the tyre 1 and the introduction implement 16 is varied in the axial direction of the tyre and the liquid composition 41a continues to be introduced/injected without interruption until the tyre has made a predetermined number of rotations or the tyre has reached a predetermined position in the axial direction thereof; as a result, the noise damper 4 comprising the continuous ribbon 41 can be placed at a predetermined angle with respect to the direction of rotation of the tyre, as shown in figures 1 and 2 described above.

It should be noted that with the device 10 according to this exemplary embodiment, the introduction implement 16 is moved in the axial direction relative to the tyre 1 which is held in a fixed axial position by means of the tyre holding and rotation device 12, and the noise damper 41 (4) in the form of a continuous ribbon is formed on the internal surface 2 of the tyre, but it is equally possible for the noise damper 41 (4) in the form of a continuous ribbon to be formed on the internal surface 2 of the tyre by means of a device with which the position of the introduction implement 16 in the axial direction of the tyre is fixed, and the tyre holding and rotation device 12 or tyre drive device 14 is provided with a means for moving the tyre in the axial direction, so that the relative positional relationship of the tyre 1 and introduction implement 16 can be varied.

According to this mode of embodiment, a liquid composition (to be described more specifically below) which starts to undergo gelification after a predetermined amount of time has elapsed, after having been injected onto the tyre internal surface 2 by means of the nozzle 16b, is used as the liquid composition 41a which is introduced onto the tyre internal surface 2 in order to form the continuous ribbon 41. The number of turns of the tyre and the time until the liquid composition forms a gel are set in such a way that gelification is completed before the tyre has rotated through 180°. By virtue of these settings, it is possible to suppress events which may arise such as some of the ungelled liquid composition 41a dropping downwards.

After this, the liquid composition 41a starts to foam due to a reaction with the foaming agent mixed with the liquid composition 41a, and the mixture is cooled/dried by the ambient temperature, and foaming is completed, whereby the liquid composition 41a introduced onto the tyre internal surface changes into a sound-absorbing material, and as a result the liquid composition 41a is fixed to the tyre internal surface 2 as the continuous ribbon 41, thereby forming the noise damper 4 for reducing cavity resonance (see figures 1 and 2).

As described above, the number of turns of the tyre 1 is set in such a way that the liquid composition 41a has gelled before the tyre has rotated through 180°. According to this mode of embodiment, the number of turns of the tyre 1 is set at between 0.6 rpm and 300 rpm, but this number is preferably set at between 12 rpm and 180 rpm.

Furthermore, according to this mode of embodiment, the liquid composition 41a which is used is a liquid composition 41a for which the time until gelification is from 1 second to less than 60 seconds, and a liquid composition 41a which gels in a time from 3 seconds to less than 30 seconds is preferably used.

The number of turns of the tyre 1 is appropriately set according to the liquid composition 41a which is used.

It should be noted that there may be a difference in the growth rate (foaming rate) of the material at the material surface and inside the material due to differences in the material temperature of the liquid composition 41a and the ambient temperature during the process of forming the noise damper, and a thin film-like portion may be formed at the material surface. The film-like portion which is present at the surface of this noise damper in the form of a continuous ribbon makes it possible to achieve an effect of preventing water from penetrating into the noise damper in the form of a continuous ribbon and improving the durability of the noise damper in the form of a continuous ribbon. A liquid composition 41a which readily allows this kind of film portion to be formed is, for example, a polyurethane composition.

The liquid composition 41a is a mixture of the foaming agent and a composition in liquid form for forming the noise damper, and the mixing device 20 for introducing said composition into the introduction implement 16 should be able to mix a predetermined composition with a predetermined foaming agent, and introduce this mixture into the introduction implement 16. In the device 10 according to this exemplary embodiment, a high-shear dynamic mixer and a gear pump are used as the mixing device 20, and but it is sufficient to be able to satisfy the functions of this mixing device, in other words it should be possible to mix the predetermined composition with the predetermined foaming agent. The form of this mixing device may be appropriately varied, and examples include a form in which a high-shear dynamic mixer is combined with a rotary piston pump, a form in which a low-shear mixer is combined with any kind of pump, or a form in which an impact mixer is combined with any kind of pump.

A polyurethane composition or rubber composition or the like may be used as the composition in liquid form for forming the noise damper 4, which serves as the sound-absorbing material, but a polyurethane composition is preferred. The prepolymer which is compounded with the polyurethane composition generally has low viscosity and enables good moistening of the surface of a base material (the tyre internal surface 2 in this case) and also contains sufficient NCO to enable the formation of covalent bonds at the surface of the base material (the tyre internal surface 2), and therefore is also utilized as an adhesive for self-adhesion, so the noise damper in the form of a continuous ribbon can be fixed to the tyre internal surface without the introduction of a separate adhesive. Depending on the state of the internal surface of the pneumatic tyre into which the noise damper in the form of a continuous ribbon is introduced, the tyre internal surface may be subjected to a suitable treatment such as cleaning using a primer as a pretreatment before the noise damper is provided. On the other hand, if there is no need to clean the internal surface of the tyre which has been vulcanized and shaped, the liquid composition 41a is injected/introduced onto the tyre internal surface 2 directly after the tyre 1 itself has been vulcanized and shaped, without a pretreatment being carried out.

The foaming agent which is used in this exemplary embodiment is water. The isocyanate which is compounded with the polyurethane composition produces carbon dioxide as a result of the chemical reaction with water, so it is possible to foam the liquid composition without the use of a costly foaming agent. Furthermore the gas which is produced is carbon dioxide, so an operator is not subjected to any unpleasant odour and there is no adverse effect on the health of the operator.

The isocyanate which is used in this exemplary embodiment is MDI. It is equally possible to use TDI as the isocyanate, but MDI has higher viscosity during shaping than TDI, so this is preferred in the case of a production method in which a liquid composition is introduced into a rotating tyre, as in the present case.

The polyol which is used in this exemplary embodiment is a polyether. It is equally possible to use other raw materials as the polyol, but when a polyether-based polyol is used, the elasticity is superior to when a polyester-based polyol in particular is used, a polyether-based polyol is less hydrolysable, and a noise damper in the form of a continuous ribbon can be obtained at lower cost.

A particularly preferred mode of embodiment of the present invention has been described above, but the present invention is not limited to the mode of embodiment shown in the figures and a number of various modes may be implemented.

### Key to Symbols

- 1: Pneumatic tyre
- 2: Tyre internal surface
- 3: Tread
- 4: Noise damper
- 41: Continuous ribbon formed by means of noise damper
- 411: Start end of continuous ribbon
- 412: Terminal end of continuous ribbon
- 5: Continuous groove
- 41a: Liquid composition
- 10: Device for introducing noise damper in the form of a continuous ribbon onto the tyre internal surface
- 12: Tyre holding and rotation device
- 14: Tyre drive device
- 16: Introduction implement (nozzle) for introducing/injecting liquid composition onto the tyre internal surface
- 18: Introduction implement holding/moving device for moving the position of the introduction implement 16
- 20: Mixing device

## Claims

1. Method for producing a pneumatic tyre (1) in which a noise damper (4) in the form of at least one continuous ribbon (41) for reducing cavity resonance in a tyre cavity is provided on the internal surface (2) of a tyre on the inside in the radial direction of the tyre corresponding to the tyre tread, said method being **characterized in that** it includes the following stages:
a stage in which a vulcanized and shaped tyre which is not provided with the abovementioned noise damper is provided;
a stage in which a composition for forming the noise damper is mixed with a foaming agent to produce a liquid composition (41a);
a stage in which the tyre (1) is rotated in an upright state by means of a tyre holding and rotation device (12), and the liquid composition is introduced onto the tyre internal surface by means of a device (16) for introducing the liquid composition;
a stage in which the relative positional relationship of the pneumatic tyre and the introduction implement (16) in the axial direction of the tyre is varied while the liquid composition is introduced onto the tyre internal surface, and the liquid composition introduced onto the tyre internal surface is formed into a gel; and
a stage in which the gelled liquid composition is foamed and dried.

2. Method for producing a pneumatic tyre according to claim 1, in which the speed of rotation of the tyre and the time until the liquid composition forms a gel in the stage of introducing the liquid composition are set in such a way that the liquid composition forms a gel before the tyre has been rotated through 180°.

3. Method for producing a pneumatic tyre according to claim 1 or 2, in which the liquid composition is a polyurethane composition.

4. Method for producing a pneumatic tyre according to claim 3, in which the polyurethane composition comprises at least MDI serving as an isocyanate, and polyether serving as a polyol.

5. Method for producing a pneumatic tyre according to any one of claims 1 to 4, in which the foaming agent is water.

6. Method for producing a pneumatic tyre according to any one of claims 1 to 5, in which the speed of rotation of the tyre when the liquid composition is introduced is between 0.6 rpm and 300 rpm.

7. Method for producing a pneumatic tyre according to any one of claims 1 to 6, in which the speed of rotation of the tyre when the liquid composition is introduced is between 12 rpm and 180 rpm.

8. Method for producing a pneumatic tyre according to any one of claims 1 to 7, in which the time until the liquid composition forms a gel is at least equal to 1 second but less than 60 seconds.

9. Method for producing a pneumatic tyre according to any one of claims 1 to 8, in which the time until the liquid composition forms a gel is at least equal to 3 seconds but less than 30 seconds.

10. Method for producing a pneumatic tyre according to any one of claims 1 to 9, in which the liquid composition is introduced without pretreatment of the internal surface of the vulcanized and shaped tyre which is provided.

## Patentansprüche

1. Verfahren zum Herstellen eines Luftreifens (1), in dem ein Geräuschdämpfer (4) in Form mindestens eines kontinuierlichen Bandes (41) zum Verringern einer Hohlraumresonanz in einem Reifenhohlraum auf der Innenoberfläche (2) eines Reifens auf der Innenseite in der radialen Richtung des Reifens, die der Reifenlauffläche entspricht, bereitgestellt wird, wobei das Verfahren **dadurch gekennzeichnet ist, dass** es die folgenden Stufen aufweist:
eine Stufe, in der ein vulkanisierter und geformter Reifen, der nicht mit dem oben erwähnten Geräuschdämpfer versehen ist, bereitgestellt wird;
eine Stufe, in der eine Zusammensetzung zum Bilden des Geräuschdämpfers mit einem Schaummittel gemischt wird, um eine flüssige Zusammensetzung (41a) zu erzeugen;
eine Stufe, in welcher der Reifen (1) in einem aufrechten Zustand mittels einer Reifenhalte- und-drehvorrichtung (12) gedreht wird und die flüssige Zusammensetzung auf die Reifeninnenoberfläche mittels einer Vorrichtung (16) zum Einführen der flüssigen Zusammensetzung eingeführt wird;
eine Stufe, in der die relative Positionsbeziehung des Luftreifens und das Einführgerät (16) in der axialen Richtung des Reifens variiert wird, während die flüssige Zusammensetzung auf die Reifeninnenoberfläche eingeführt wird, und die flüssige Zusammensetzung, die auf die Reifeninnenoberfläche gegeben wird, zu einem Gel gebildet wird; und
eine Stufe, in der die gelierte flüssige Zusammensetzung geschäumt und getrocknet wird.

2. Verfahren zum Herstellen eines Luftreifens nach Anspruch 1, wobei die Drehzahl des Reifens und die Zeit, bis die flüssige Zusammensetzung ein Gel in der Stufe des Einführens der flüssigen Zusammensetzung bildet, derart eingestellt werden, dass die flüssige Zusammensetzung ein Gel bildet, bevor der Reifen um 180° gedreht wurde.

3. Verfahren zum Herstellen eines Luftreifens nach Anspruch 1 oder 2, wobei die flüssige Zusammensetzung eine Polyurethanzusammensetzung ist.

4. Verfahren zum Herstellen eines Luftreifens nach Anspruch 3, wobei die Polyurethanzusammensetzung mindestens MDI umfasst, das als ein Isocyanat dient, und Polyether, der als ein Polyol dient.

5. Verfahren zum Herstellen eines Luftreifens nach einem der Ansprüche 1 bis 4, wobei das Schaummittel Wasser ist.

6. Verfahren zum Herstellen eines Luftreifens nach einem der Ansprüche 1 bis 5, wobei die Drehzahl des Reifens, wenn die flüssige Zusammensetzung eingeführt wird, zwischen 0,6 U/Min. und 300 U/Min. liegt.

7. Verfahren zum Herstellen eines Luftreifens nach einem der Ansprüche 1 bis 6, wobei die Drehzahl des Reifens, wenn die flüssige Zusammensetzung eingeführt wird, zwischen 12 U/Min. und 180 U/Min. liegt.

8. Verfahren zum Herstellen eines Luftreifens nach einem der Ansprüche 1 bis 7, wobei die Zeit, bis die flüssige Zusammensetzung ein Gel bildet, mindestens 1 Sekunde, jedoch weniger als 60 Sekunden beträgt.

9. Verfahren zum Herstellen eines Luftreifens nach einem der Ansprüche 1 bis 8, wobei die Zeit, bis die flüssige Zusammensetzung ein Gel bildet, mindestens 3 Sekunde, jedoch weniger als 30 Sekunden beträgt.

10. Verfahren zum Herstellen eines Luftreifens nach einem der Ansprüche 1 bis 9, wobei die flüssige Zusammensetzung ohne Vorbehandlung der Innenoberfläche des vulkanisierten und geformten Reifens, der bereitgestellt wird, eingeführt wird.

## Revendications

1. Procédé de fabrication d'un pneumatique (1), dans lequel un amortisseur de bruit (4) se présentant sous la forme d'au moins un ruban continu (41) pour réduire la résonance de cavité dans une cavité de pneu est prévu sur la surface interne (2) d'un pneu sur l'intérieur dans la direction radiale du pneu correspondant à la bande de roulement du pneu, ledit procédé étant **caractérisé en ce qu'**il comprend les étapes suivantes:
une étape au cours de laquelle un pneu vulcanisé et moulé qui n'est pas pourvu de l'amortisseur de bruit mentionné ci-dessus est fourni;
une étape au cours de laquelle une composition pour former l'amortisseur de bruit est mélangée avec un agent moussant de manière à produire une composition liquide (41a);
une étape au cours de laquelle le pneu (1) est tourné dans un état vertical au moyen d'un dispositif de rotation et de maintien de pneu (12), et la composition liquide est introduite sur la surface interne du pneu au moyen d'un dispositif (16) pour introduire la composition liquide;
une étape au cours de laquelle la relation de position relative du pneumatique et l'introduction de l'instrument (16) dans la direction axiale du pneu sont modifiées pendant que la composition est introduite sur la surface interne du pneu, et la composition liquide introduite sur la surface interne du pneu est formée en un gel; et
une étape au cours de laquelle la composition liquide gélifiée est transformée en mousse et séchée.

2. Procédé de fabrication d'un pneumatique selon la revendication 1, dans lequel la vitesse de rotation du pneu et le temps nécessaire pour que la composition liquide forme un gel à l'étape d'introduction de la composition liquide sont réglés de telle sorte que la composition liquide forme un gel avant que le pneu ait été tourné de 180°.

3. Procédé de fabrication d'un pneumatique selon la revendication 1 ou 2, dans lequel la composition liquide est une composition de polyuréthane.

4. Procédé de fabrication d'un pneumatique selon la revendication 3, dans lequel la composition de polyuréthane comprend au moins un MDI servant d'isocyanate, et un polyéther servant de polyol.

5. Procédé de fabrication d'un pneumatique selon l'une quelconque des revendications 1 à 4, dans lequel l'agent moussant est l'eau.

6. Procédé de fabrication d'un pneumatique selon l'une quelconque des revendications 1 à 5, dans lequel la vitesse de rotation du pneu lorsque la composition liquide est introduite est comprise entre 0,6 tpm et 300 tpm.

7. Procédé de fabrication d'un pneumatique selon l'une quelconque des revendications 1 à 6, dans lequel la vitesse de rotation du pneu lorsque la composition liquide est introduite est comprise entre 12 tpm et 180 tpm.

8. Procédé de fabrication d'un pneumatique selon l'une quelconque des revendications 1 à 7, dans lequel le temps nécessaire pour que la composition liquide forme un gel est au moins égal à 1 seconde mais à moins de 60 secondes.

9. Procédé de fabrication d'un pneumatique selon l'une quelconque des revendications 1 à 8, dans lequel le temps nécessaire pour que la composition liquide forme un gel est au moins égale à 3 secondes mais à moins de 30 secondes.

10. Procédé de fabrication d'un pneumatique selon l'une quelconque des revendications 1 à 9, dan lequel la composition liquide est introduite sans prétraitement de la surface interne du pneu vulcanisé et moulé qui est obtenu.
